# EUROPÄISCHE PATENTSCHRIFT

(11) **EP 2 338 218 B1**
(45) Veröffentlichungstag und Bekanntmachung des Hinweises auf die Patenterteilung: **02.04.2014**
(21) Anmeldenummer: 09782675.4
(22) Anmeldetag: 07.09.2009
(51) Int. Cl.: H02K 5/16, H02K 7/08, F16B 2/24, F16B 21/16, F16B 21/18, F16C 35/067

(54) **HALTEBÜGEL ZUR FIXIERUNG EINES ANKERWELLENLAGERS EINES ELEKTROMOTORS**
RETAINING CLIP FOR THE FIXATION OF AN ELECTRIC MOTOR ARMATURE SHAFT BEARING
PINCE DE RETENUE POUR SUPPORT D'ARBRE D'INDUIT DE MOTEUR ÉLECTRIQUE

(30) Priorität: 10.10.2008 DE 102008042759
(43) Veröffentlichungstag der Anmeldung: 29.06.2011
(73) Patentinhaber: Robert Bosch GmbH, 70442 Stuttgart (DE)
(72) Erfinder: SINGLER, Thomas, 77790 Steinach (DE); SAUM, Andreas, 77815 Buehl (DE)
(86) Internationale Anmeldenummer: PCT/EP2009/061531
(87) Internationale Veröffentlichungsnummer: WO 2010/040610

(56) Entgegenhaltungen:
- CH-A- 358 633
- DE-A1- 2 352 916
- FR-A1- 2 620 876
- JP-A- 2002 359 945
- US-A- 1 076 399
- US-A- 5 127 764
- US-A- 5 624 193
- US-B1- 6 288 466

## Beschreibung

Die Erfindung betrifft eine Anordnung zur Fixierung eines Lagers einer Ankerwelle eines Elektromotors gemäß Anspruch 1 und einen Elektromotor gemäß dem Oberbegriff des Anspruchs 9.

### Stand der Technik

Aus der DE 197 27 120 A1 sind bereits ein Haltebügel und ein Elektromotor der eingangs genannten Art für eine elektrische Scheibenwischer-Antriebseinheit bekannt. Der Haltebügel dient dort dazu, ein Kugellager zur Lagerung eines Ankers des Elektromotors in einem Getriebegehäuse axial zu sichern, und weist eine einseitig offene Aussparung für die Ankerwelle auf, so dass er sich von einer Seite her über die Ankerwelle schieben lässt. Aus der DE 197 27 120 A1 lässt sich jedoch nicht entnehmen, wie der Haltebügel in seiner Lage gesichert wird, um ein ungewolltes Lösen des Haltebügels zu verhindern.

Aus den Dokumenten DE 2352916 A, US 1,076,399 A, US 5,127,764 und US 6,288,466 A sind verschiedene Anordnungen zur Fixierung eines Lagers einer Welle bekannt.

Ausgehend hiervon liegt der Erfindung die Aufgabe zugrunde, einen Haltebügel und einen Elektromotor der eingangs genannten Art dahingehend zu verbessern, dass sich der Haltebügels auf einfache Weise sichern lässt.

### Offenbarung der Erfindung

Diese Aufgabe wird erfindungsgemäß durch eine Anordnung gemäß Ansprunch 1 gelöst.

Der Erfindung liegt der Gedanke zugrunde, durch die Verrastung für eine schnell herstellbare und dauerhafte Eigensicherung des Haltebügels zu sorgen, wobei die doppelte Verrastung des Haltebügels beiderseits der Aussparung bzw. der Ankerwelle nicht nur die Gefahr eines ungewollten Lösens des Haltebügels verringert, sondern diesen zugleich auch in einer genau definierten Lage festhält.

Gemäß der Erfindung sind die Rastelemente bzw. Rastzungen federelastisch verformbar und zweckmäßig einstückig mit dem vorzugsweise als Stanzteil aus Federblech ausgebildeten Haltebügel verbunden. Die beiden Rastzungen stehen über dieselbe Breitseitefläche des Haltebügels über. Die Ausrichtung der Rastzungen, und die Form, die den Rastzungen beim Herausbiegen aus der vom Blechstanzteil aufgespannten Ebene verliehen wird, sind zweckmäßig so gewählt, dass freie Enden der Rastzungen allgemein in eine zu einer Montagerichtung des Haltebügels entgegengesetzte Richtung weisen, während ihre vom Blechstanzteil abgewandten Oberflächen eine Auflaufschräge für ein benachbartes Bauteil bilden, mit dem der Haltebügel verrastet wird.

Vorteilhafterweise sind die beiden Rastzungen aus einer Ebene herausgebogen, die von dem ansonsten ebenen Haltebügel bzw. einer Breitseitenfläche desselben aufgespannt wird.

Die Ausbildung der Rastzungen erfolgt vorzugsweise im Zuge der Herstellung des von einem Blechstanzteil gebildeten Haltebügels, indem sie zweckmäßig während des Stanzens des Blechstanzteils entlang einer allgemein U-förmigen Stanzlinie von diesem getrennt und dabei zugleich aus der vom Blechstanzteil aufgespannten Ebene herausgebogen werden.

Dadurch wird erreicht, dass die federelastischen Rastzungen während der Montage des Haltebügels zuerst von dem benachbarten Bauteil in Richtung das Blechstanzteils gedrückt und dabei federelastisch verformt werden, bis ihre freien Enden zu einer Hinterschneidung des benachbarten Bauteils gelangen, von wo an von diesem keine Kraft mehr auf die Rastzungen ausgeübt wird. Die Rastzungen kehren daraufhin aufgrund ihrer elastischen Rückstellkräfte in ihre Ausgangsstellung zurück, in der ihre freien Enden die Hinterschneidung des zum Verrasten dienenden benachbarten Bauteil hintergreifen.

Die Rastzungen können vorteilhaft eine allgemein I-förmige längliche Gestalt aufweisen, wobei sie an einem Stirnende einstückig mit dem Blechstanzteil verbunden sind. Alternativ können die Rastzungen jedoch auch eine allgemein U-förmige Gestalt aufweisen, wobei sie in diesem Fall zweckmäßig an den Stirnenden der beiden Schenkel des U einstückig mit dem Blechstanzteil verbunden sind, das dort zwischen den beiden Schenkeln des U mit einer zusätzlichen Stanzöffnung versehen ist.

Die Längsachsen der I- oder U-förmigen Rastzungen können entweder parallel zu einer Symmetrie- oder Mittelebene des Haltebügels bzw. der allgemein U-förmigen Aussparung ausgerichtet sein oder mit dieser einen spitzen Winkel einschließen.

Um für eine gleichzeitige Verrastung des Haltebügels beiderseits der Ankerwelle zu sorgen, sind die beiden Rastzungen vorzugsweise symmetrisch zur Symmetrie- oder Mittelebene des Haltebügels bzw. der allgemein U-förmigen Aussparung angeordnet, die an ihrem inneren Ende vorteilhaft von einem halbkreisförmigen Randabschnitt und zwischen dem halbkreisförmigen Randabschnitt und dem Rand des Haltebügels von zwei zueinander parallelen Randabschnitten begrenzt wird.

### Kurze Beschreibung der Zeichnungen

Im folgenden wird die Erfindung anhand einiger in der Zeichnung dargestellter Ausführungsbeispiele näher erläutert. Es zeigen
Fig. 1 eine Ansicht eines erfindungsgemäßen Haltebügels zur Fixierung eines Lagers einer Ankerwelle eines Elektromotors bei Betrachtung in Richtung der Längsachse der Ankerwelle;
Fig. 2 eine Schnittansicht entlang der Linie II-II der Fig. 1;
Fig. 3 eine Schnittansicht entlang der Linie III-III der Fig. 1;
Fig. 4 eine vergrößerte Ansicht des Ausschnitts IV in Fig. 1, die eine fingerförmige Rastzunge des Haltebügels zeigt;
Fig. 5 eine vergrößerte Ansicht entsprechend Fig. 4, die eine bügelförmige Rastzunge eines anderen Haltebügels zeigt;
Fig. 6 eine Ansicht eines weiteren erfindungsgemäßen Haltebügels entsprechend Fig. 1.

### Ausführungsformen der Erfindung

Die in der Zeichnung dargestellten Haltebügel 2 dienen jeweils zur Fixierung eines Festlagers einer Ankerwelle eines Elektromotors (nicht dargestellt) sowie zum Ausgleich von Montage- und Fertigungstoleranzen.

Bei den Haltebügeln 2 handelt es sich jeweils um Blechstanzteile, die zu ihrer Herstellung aus einem ebenen Federblech ausgestanzt und partiell durch Biegen umgeformt werden.

Bei sämtlichen Haltebügeln 2 weisen die Blechstanzteile einen äußeren Umriss in Form eines Rechtecks auf und sind mit einer einseitig offenen Aussparung 4 versehen, die sich von einem 8 von zwei entgegengesetzten Längsseitenrändern 6, 8 des rechteckigen Haltebügels 2 aus bis über dessen Mitte hinaus in Richtung des anderen Längsseitenrandes 6 erstreckt.

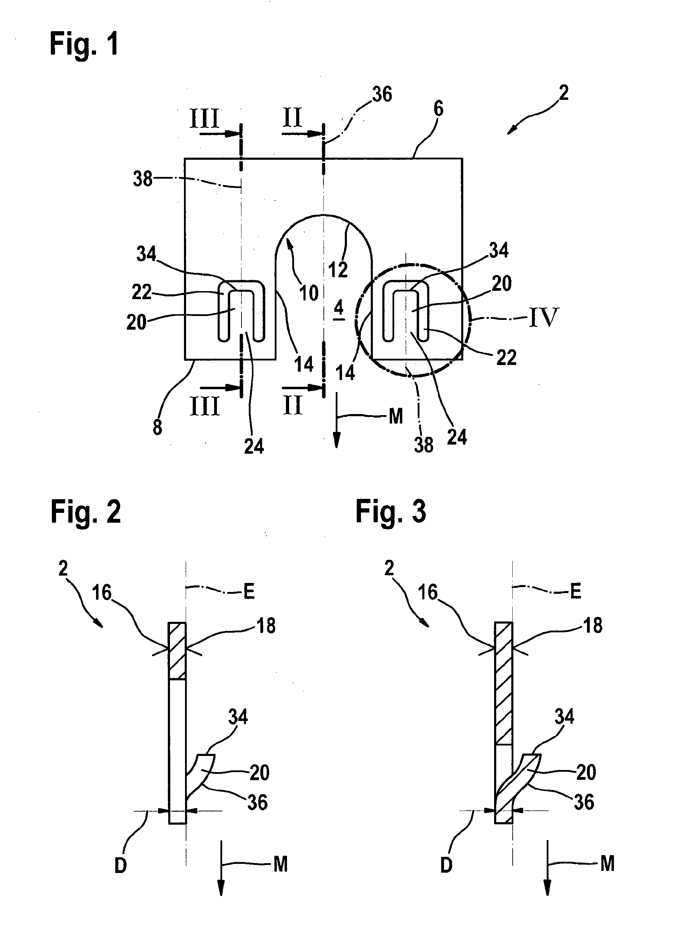

Die Aussparung 4 weist einen U-förmigen Begrenzungsrand 10 auf, der sich aus einem halbkreisförmigen Randabschnitt 12 und zwei an die beiden Enden des halbkreisförmigen Randabschnitts 12 anschließenden Randabschnitten 14 zusammensetzt, die parallel zueinander bis zum Längsseitenrand 8 verlaufen. Die Ausrichtung der Aussparung ist so gewählt, dass sie sich in der in den Figuren 1, 2, 3 und 6 durch einen Pfeil M dargestellten Montagerichtung öffnet.

Die Aussparung 4 ist so bemessen, dass sich der Haltebügel 2 bei seiner Montage in einem Gehäuse des Elektromotors neben dem zu fixierenden Lager von einer Seite her in der Montagerichtung M über die Ankerwelle schieben lässt und anschließend um die Aussparung 4 herum mit einer 16 seiner beiden ebenen Breitseitenflächen 16, 18 gegen einen Außenring des zu sichernden Lagers anliegt.

Um die Haltebügel 2 in dieser Lage zu sichern und zu verhindern, dass sie sich entgegen der Montagerichtung M lösen, weisen die Haltebügel 2 jeweils zwei beiderseits der Aussparung 4 angeordnete Rastzungen 20 auf, mit deren Hilfe sich die Haltebügel 2 bei ihrer Montage mit einem in der Zeichnung nicht dargestellten benachbarten Bauteil, zum Beispiel einem Teil des Gehäuses oder Ankers des Elektromotors, formschlüssig verrasten lassen.

Die beiden Rastzungen 20 bilden einen integralen Bestandteil des als Blechstanzteil ausgebildeten Haltebügels 2 und bestehen wie der Rest desselben aus dem Federblech, so dass sie sich in Richtung von dessen Dicke D (Fig. 2 und 3) federelastisch verformen können.

Die Rastzungen 20 werden bei der Fertigung des als des Blechstanzteil ausgebildeten Haltebügels 2 gemeinsam mit diesem aus dem Federblech ausgestanzt, wobei sie entlang einer allgemein U-förmigen Stanzöffnung 22 vom Rest des Haltebügels 2 getrennt und zugleich aus einer von der Breitseitenfläche 18 des Haltebügels 2 aufgespannten Ebene E herausgebogen werden, wie am besten in Fig. 2 und 3 dargestellt.

Bei dem in den Figuren 1 bis 4 dargestellten Haltebügel 2 sind die Rastzungen 20 allgemein fingerförmig ausgebildet, das heißt, sie besitzen eine längliche allgemein I-förmige Gestalt, wobei sie an einem allgemein in Montagerichtung M weisenden Stirnende 24 einstückig mit dem Rest des Haltebügels 2 verbunden und ansonsten durch die U-förmige Stanzöffnung 22 vom Rest des Haltebügels 2 betrennt sind.

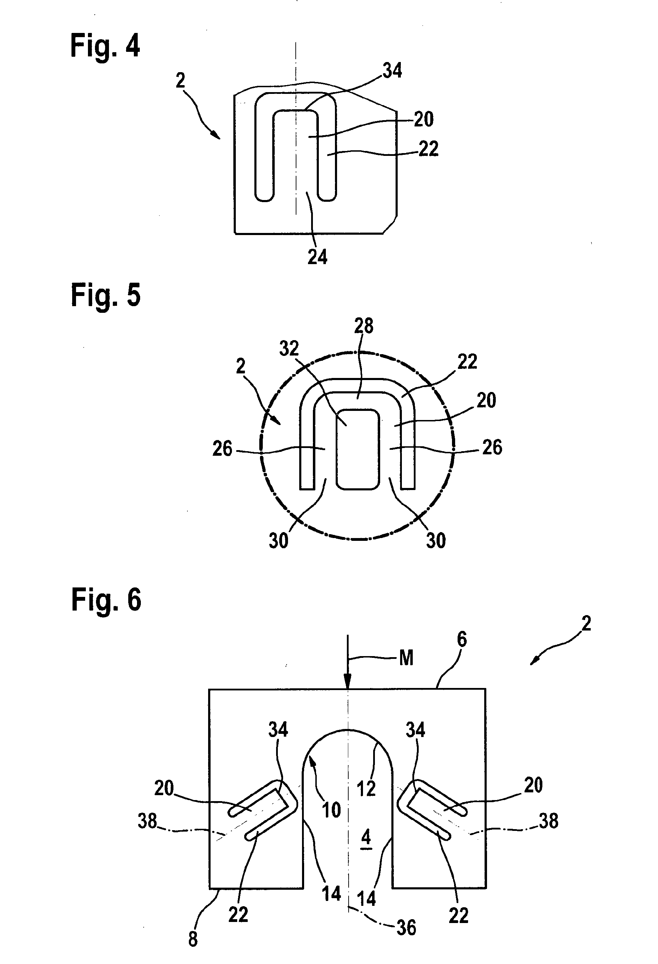

Die in Fig. 5 dargestellte Rastzunge 20 ist dagegen allgemein bügelförmig ausgebildet, das heißt, sie besitzt eine allgemein U-förmige Gestalt mit zwei parallelen Schenkelteilen 26 und einem die Schenkelteile 26 verbindenden Jochteil 28. Die Schenkelteile 26 sind an ihren allgemein in Montagerichtung M weisenden Stirnenden 30 einstückig mit dem Rest des Haltebügels 2 verbunden, während die Schenkelteile 26 und der Jochteil 28 ansonsten an ihrer Außenseite durch die U-förmige Stanzöffnung 22 begrenzt und vom Rest des Haltebügels 2 getrennt werden, während sie an ihrer Innenseite durch eine in der Mitte der Rastzunge 20 angeordnete rechteckige Stanzöffnung 32 mit gerundeten Ecken begrenzt werden.

Wie am besten in Fig. 2 und 3 dargestellt, steht jede der beiden Rastzungen 20 so über die benachbarte Breitseitenfläche 18 des Haltebügels 2 über, dass ihr freies Stirnende 34 allgemein in eine zur Montagerichtung M entgegengesetzte Richtung weist und ihre von der Breitseitenfläche 18 abgewandte Oberfläche 36 eine in Montagerichtung M weisende Auflaufschräge für das benachbarte Bauteil bildet, mit dem der Haltebügel 2 verrastet wird. Das benachbarte Bauteil ist in Höhe der Ankerwelle mit Hinterschneidungen versehen, hinter denen die freien Stirnenden 34 der Rastzungen 20 einrasten, wenn der Haltebügel 2 in der Montagerichtung M über die Ankerwelle geschoben wird.

Um für eine gleichzeitige und gleichmäßige Verrastung der beiden beiderseits der Aussparung 4 angeordneten Rastzungen 20 zu sorgen, sind die Rastzungen 20 spiegelsymmetrisch zu einer zu den Breitseitenflächen 6, 8 senkrechten Mittel- oder Symmetrieebene 36 des Haltebügels 2 bzw. der U-förmigen Aussparung 4 ausgerichtet.

Bei dem in den Figuren 1 bis 4 dargestellten Haltebügel 2 weisen die beiden Rastzungen 20 Längs- oder Mittelachsen 38 auf, die parallel zur Mittel- oder Symmetrieebene 36 des Haltebügels 2 ausgerichtet sind, wobei die freien Stirnenden 34 der Rastzungen 20 in eine zur Montagerichtung M entgegengesetzte Richtung weisen. Bei dem in Fig. 6 dargestellten Haltebügel 2 konvergieren hingegen die Längs- oder Mittelachsen 38 der beiden Rastzungen 20 unter einem Winkel von bis zu 45 Grad in Richtung der Mittel- oder Symmetrieebene 36 des Haltebügels 2.

## Patentansprüche

1. Anordnung zur Fixierung eines Lagers einer Ankerwelle eines Elektromotors, mit einem Haltebügel (2), der eine einseitig offene Aussparung für die Ankerwelle und zwei beiderseits der Aussparung (4) angeordnete Rastelemente (20) zum Verrasten des Haltebügels (2) aufweist, wobei der Haltebügel (2) ein Stanzteil aus Federblech ist, mit dem die beiden Rastelemente in Form von Rastzungen (20) einstückig verbunden sind, wobei sie über eine (18) von zwei im Wesentlichen ebenen Breitseitenflächen (16, 18) des Haltebügels (2) überstehen, federelastisch verformbar sind und freie Enden (34, 28) aufweisen, die sich allgemein in eine zu einer Montagerichtung (M) des Haltebügels (2) entgegengesetzte Richtung erstrecken und während der Montage, eine Hinterschneidung eines zum Verrasten des Haltebügels (2) dienenden benachbarten Bauteils hintergreifen.

2. Anordnung nach Anspruch 1, **dadurch gekennzeichnet, dass** die beiden Rastelemente (20) aus einer Ebene (E) der Breitseitenfläche (18) herausgebogen sind.

3. Anordnung nach einem der vorangehenden Ansprüche, **dadurch gekennzeichnet, dass** die Rastelemente (20) jeweils durch eine allgemein U-förmige Stanzöffnung (22) vom Rest des Haltebügels (2) getrennt sind.

4. Anordnung nach einem der Ansprüche 1 bis 3, **dadurch gekennzeichnet, dass** die Rastelemente (20) eine allgemein I-förmige Gestalt aufweisen und an einem Stirnende (24) einstückig mit dem Rest des Haltebügels (2) verbunden sind.

5. Anordnung nach einem der Ansprüche 1 bis 3, **dadurch gekennzeichnet, dass** die Rastelemente (20) eine allgemein U-förmige Gestalt aufweisen und an den Stirnenden (30) von zwei Schenkeln (26) des U einstückig mit dem Rest des Haltebügels (2) verbunden sind.

6. Anordnung nach einem der vorangehenden Ansprüche, **dadurch gekennzeichnet, dass** die beiden Rastelemente (20) zu einer Symmetrieebene (36) des Haltebügels (2) bzw. der Aussparung (4) symmetrisch sind.

7. Anordnung nach einem der vorangehenden Ansprüche, **dadurch gekennzeichnet, dass** die Rastelemente (20) Längs- oder Mittelachsen (38) aufweisen, die parallel zu einer Symmetrieebene (36) des Haltebügels (2) bzw. der Aussparung (4) ausgerichtet sind.

8. Anordnung nach einem der vorangehenden Ansprüche, **dadurch gekennzeichnet, dass** die Rastelemente (20) Längs- oder Mittelachsen (38) aufweisen, die in Richtung einer Symmetrieebene (36) des Haltebügels (2) bzw. der Aussparung (4) konvergieren.

9. Elektromotor, mit einem Stator, einem Anker und einer Ankerwelle, die in einem Festlager gelagert ist, **dadurch gekennzeichnet, dass** das Festlager mittels eines Haltebügels (2) einer Anordnung nach einem der vorangehenden Ansprüche fixiert ist.

## Claims

1. Arrangement for the fixation of a bearing of an armature of an electric motor, with a retaining clip (2) which has a clearance, open on one side, for the armature shaft and two latching elements (20), arranged on both sides of the clearance (4), for latching the retaining clip (2), the retaining clip (2) being a part stamped out of spring sheet steel, to which the two latching elements in the form of latching tongues (20) are connected in one piece, the said latching elements projecting beyond one (18) of two essentially planar wide side faces (16, 18) of the retaining clip (2), being deformable in a springelastic manner and having free ends (34, 28) which extend generally in a direction opposite to a mounting direction (M) of the retaining clip (2) and which, during mounting, engage behind an undercut of an adjacent component serving for latching the retaining clip (2).

2. Arrangement according to Claim 1, **characterized in that** the two latching elements (20) are bent out of a plane (E) of the wide side face (18).

3. Arrangement according to one of the preceding claims, **characterized in that** the latching elements (20) are separated from the rest of the retaining clip (2) in each case by a generally U-shaped stamped orifice (22).

4. Arrangement according to one of Claims 1 to 3, **characterized in that** the latching elements (20) have a generally I-shaped configuration and are connected on an end face (24) in one piece to the rest of the retaining clip (2).

5. Arrangement according to one of Claims 1 to 3, **characterized in that** the latching elements (20) have a generally U-shaped configuration and are connected in one piece to the rest of the retaining clip (2) on the end faces (30) of two legs (26) of the U.

6. Arrangement according to one of the preceding claims, **characterized in that** the two latching elements (20) are symmetrical with respect to a plane of symmetry (36) of the retaining clip (2) or of the clearance (4).

7. Arrangement according to one of the preceding claims, **characterized in that** the latching elements (20) have longitudinal or centre axes (38) which are oriented parallel to a plane of symmetry (36) of the retaining clip (2) or of the clearance (4).

8. Arrangement according to one of the preceding claims, **characterized in that** the latching elements (20) have longitudinal or centre axes (38) which converge in the direction of a plane of symmetry (36) of the retaining clip (2) or of the clearance (4).

9. Electric motor, with a stator, with an armature and with an armature shaft which is mounted in a fixed bearing, **characterized in that** the fixed bearing is fixed by means of a retaining clip (2) of an arrangement according to one of the preceding claims.

## Revendications

1. Agencement de fixation d'un palier d'arbre d'induit d'un moteur électrique, comprenant une pince de fixation (2) qui présente un évidement ouvert d'un côté pour l'arbre d'induit et deux éléments d'encliquetage (20) disposés de chaque côté de l'évidement (4) pour l'encliquetage de la pince de fixation (2), la pince de fixation (2) étant une pièce estampée en tôle élastique, avec laquelle les deux éléments d'encliquetage en forme de langues d'encliquetage (20) sont connectés d'une seule pièce, les éléments d'encliquetage faisant saillie au-delà de l'une (18) de deux surfaces latérales larges essentiellement planes (16, 18) de la pince de fixation (2), étant déformables élastiquement et présentant des extrémités libres (34, 28) qui s'étendent généralement dans une direction opposée à une direction de montage (M) de la pince de fixation (2) et, pendant le montage, viennent en prise par l'arrière avec une contre-dépouille d'un composant adjacent servant à l'encliquetage de la pince de fixation (2).

2. Agencement selon la revendication 1, **caractérisé en ce que** les deux éléments d'encliquetage (20) sont recourbés hors d'un plan (E) de la surface latérale large (18).

3. Agencement selon l'une quelconque des revendications précédentes, **caractérisé en ce que** les éléments d'encliquetage (20) sont à chaque fois séparés du reste de la pince de fixation (2) par une ouverture estampée (22) généralement en forme de U.

4. Agencement selon l'une quelconque des revendications 1 à 3, **caractérisé en ce que** les éléments d'encliquetage (20) présentent une configuration généralement en forme de I et sont connectés d'une seule pièce au reste de la pince de fixation (2) au niveau d'une extrémité frontale (24).

5. Agencement selon l'une quelconque des revendications 1 à 3, **caractérisé en ce que** les éléments d'encliquetage (20) présentent une configuration généralement en forme de U et sont connectés d'une seule pièce au reste de la pince de fixation (2) au niveau des extrémités frontales (30) de deux branches (26) du U.

6. Agencement selon l'une quelconque des revendications précédentes, **caractérisé en ce que** les deux éléments d'encliquetage (20) sont symétriques par rapport à un plan de symétrie (36) de la pince de fixation (2) ou de l'évidement (4).

7. Agencement selon l'une quelconque des revendications précédentes, **caractérisé en ce que** les éléments d'encliquetage (20) présentent des axes longitudinaux ou médians (38) qui sont orientés parallèlement à un plan de symétrie (36) de la pince de fixation (2) ou de l'évidement (4).

8. Agencement selon l'une quelconque des revendications précédentes, **caractérisé en ce que** les éléments d'encliquetage (20) présentent des axes longitudinaux ou médians (38) qui convergent dans la direction d'un plan de symétrie (36) de la pince de fixation (2) ou de l'évidement (4).

9. Moteur électrique, comprenant un stator, un induit et un arbre d'induit qui est monté dans un palier fixe, **caractérisé en ce que** le palier fixe est fixé au moyen d'une pince de fixation (2) d'un agencement selon l'une quelconque des revendications précédentes.
